# EUROPÄISCHE PATENTANMELDUNG

(11) **EP 4 361 995 A2**
(43) Veröffentlichungstag der Anmeldung: **01.05.2024**
(21) Anmeldenummer: 24155425.2
(22) Anmeldetag: 20.01.2017
(51) Int. Cl.: G08G 1/0967

(54) **VERFAHREN UND VORRICHTUNG ZUM BETREIBEN EINES VERKEHRSÜBERWACHUNGSGERÄTES, VERKEHRSÜBERWACHUNGSGERÄT UND VERKEHRSÜBERWACHUNGSSYSTEM**

(30) Priorität: 21.01.2016 DE 102016000532
(62) Teilanmeldung aus: 17700987.5
(71) Anmelder: Jenoptik Robot GmbH, 40789 Monheim (DE)
(72) Erfinder: Kienitz, Stefan, 40789 Monheim (DE); Wirz, Katrin, 40789 Monheim (DE); Reis, Siegrun, 40789 Monheim (DE); Keller, Lars Ole, 40789 Monheim (DE); Schröder, Martin, 40789 Monheim (DE)
(74) Vertreter: Waldauf, Alexander

(57) **Zusammenfassung**

Die Erfindung betrifft ein Verfahren zum Betreiben eines Verkehrsüberwachungsgerätes (102). Hierbei wird zunächst ein von einer Sensoreinrichtung (106) des Verkehrsüberwachungsgerätes (102) bereitgestelltes Sensorsignal (110) eingelesen. Anschließend wird unter Verwendung des Sensorsignals (110) eine Information (112) erzeugt. Schließlich wird die Information (112) an eine Schnittstelle (114) zu zumindest einem Fahrzeug (104) ausgegeben.

## Beschreibung

### Stand der Technik

Die vorliegende Erfindung bezieht sich auf ein Verfahren zum Betreiben eines Verkehrsüberwachungsgerätes (VÜG), auf eine entsprechende Vorrichtung, auf ein Verkehrsüberwachungsgerät sowie auf ein Verkehrsüberwachungssystem. Gegenstand der vorliegenden Erfindung ist auch ein Computerprogramm.

Die US 2014/0172283 A1 beschreibt ein Verfahren zum Ermitteln und Übertragen einer Durchschnittsgeschwindigkeit eines Fahrzeugs.

Die DE 10 2005 035 242 A1 beschreibt ein Mehrzweck-Verkehrsüberwachungssystem, bei welchem Daten zwischen Fahrzeug und Verkehrsüberwachungssystem selbst ausgetauscht werden.

Die EP2 7001 133 B1 beschreibt ein Verfahren und eine Vorrichtung zur Bildaufnahme eines geschwindigkeitsübertretenden Fahrzeugs.

### Offenbarung der Erfindung

Vor diesem Hintergrund werden mit der vorliegenden Erfindung ein Verfahren zum Betreiben eines Verkehrsüberwachungsgerätes, eine Vorrichtung, die dieses Verfahren verwendet, ein Verkehrsüberwachungsgerät, ein Verkehrsüberwachungssystem sowie schließlich ein Computerprogramm zum Ausführen des Verfahrens gemäß den Hauptansprüchen vorgestellt. Vorteilhafte Ausgestaltungen ergeben sich aus den jeweiligen Unteransprüchen und der nachfolgenden Beschreibung.

Es wird ein Verfahren zum Betreiben eines Verkehrsüberwachungsgerätes vorgestellt, wobei das Verfahren folgende Schritte umfasst:
Einlesen mindestens eines von einer Sensoreinrichtung des Verkehrsüberwachungsgerätes bereitgestellten Sensorsignals;
Austauschen einer mindestens temporär eindeutigen, verschlüsselten Objektkennung eines Fahrzeugs zwischen einer fahrzeugseitigen Schnittstelle und einer Schnittstelle des Verkehrsüberwachungsgerätes und Austauschen von Schlüsseln;
Erzeugen einer Information unter Verwendung des Sensorsignals; und
Ausgeben der Information an eine Schnittstelle zu dem Fahrzeug und/oder einer Rechnereinheit.

Unter einem Verkehrsüberwachungsgerät kann ein mobiles oder stationäres Gerät zum Erfassen eines Fahrzeugs verstanden werden. Besonders bevorzugte Beispiele bilden Verkehrsüberwachungsgeräte in Form einer Strecken- oder Bereichsüberwachung wie etwa Section-Control- oder Point-to-Point-Überwachung oder Überwachung von Ampel-Kreuzungsbereichen. Beispielsweise kann das Verkehrsüberwachungsgerät ausgebildet sein, um eine Geschwindigkeit oder ein Gewicht des Fahrzeugs oder einen Abstand des Fahrzeugs zu zumindest einem anderen Fahrzeug zu erfassen. Die Sensoreinheit kann beispielsweise eine Kamera, einen Geschwindigkeitssensor, einen Gewichtssensor oder ein Modul zur Detektion eines Kennzeichens des Fahrzeugs oder ein Modul zum Erfassen oder Verarbeiten von Ortungssignalen beliebiger Signalquellen moderner Fahrzeuge, beispielsweise WLAN, GSM-Systeme, Bluetooth-Sender (MAC usw.), Reifendrucksensoren, umfassen. Bei der Information kann es sich beispielsweise um einen Warnhinweis, ein Bild oder eine Bildsequenz des Fahrzeugs oder einen sonstigen Hinweis an einen Fahrer des Fahrzeugs handeln, wobei das Bild oder die Bildsequenzen etwa von dem Verkehrsüberwachungsgerät aufgezeichnet worden sein kann. Die Information kann beispielsweise drahtlos über eine WLAN-, Bluetooth- oder Mobilfunkverbindung an das Fahrzeug übertragen werden.

Der hier vorgeschlagene Ansatz beruht auf der Erkenntnis, dass durch die Integration einer geeigneten Datenübertragungseinheit in ein Verkehrsüberwachungsgerät Informationen zwischen dem Verkehrsüberwachungsgerät und zumindest einem Fahrzeug ausgetauscht werden können. Hierbei kann das Verkehrsüberwachungsgerät beispielsweise über Car-to-Car- oder Environment-to-Car-Kommunikation mit dem Fahrzeug kommunizieren, was insbesondere im Zusammenhang mit Point-to-Point-Messungen von Vorteil sein kann. Durch die Verwendung eines derartigen Verkehrsüberwachungsgerätes kann zum einen die Kommunikation zwischen Verkehrsüberwachung und Verkehrsteilnehmern verbessert werden; zum anderen kann dadurch die Verkehrssicherheit erhöht werden.

Mittels des hier vorgeschlagenen Ansatzes kann verhindert werden, dass ein Verkehrsüberwachungssystem sensible und datenschutzrelevante Daten wie etwa eine tatsächliche Geschwindigkeitsdifferenz zum erlaubten Limit in Kombination mit einem Kfz-Kennzeichen an unbefugte Dritte sendet. Hierzu können sicherheitsrelevante Daten und Schlüssel zwischen Fahrzeug und Verkehrsüberwachungssystem ausgetauscht werden, wobei eine Objektkennung nicht über ein unverschlüsseltes Kennzeichen, sondern über weitere Signale oder Kennungen erfolgen kann.

Gemäß einer Ausführungsform kann im Schritt des Einlesens ein Signal als das Sensorsignal eingelesen werden, das einen Abstand zwischen dem Fahrzeug und zumindest einem anderen Fahrzeug, repräsentiert. Durch diese Ausführungsform kann die Information in Abhängigkeit von dem Abstand erzeugt werden.

Erfindungsgemäß weist das Verfahren einen Schritt des Zuordnens des Kennzeichens und/oder der weiteren Signalquelle zu zumindest einer Landessprache unter Verwendung des Sensorsignals auf. Hierbei kann im Schritt des Erzeugens die Information in Abhängigkeit von der Landessprache erzeugt werden. Dies hat den Vorteil, dass die Information in einer dem Kennzeichen bzw. der weiteren Signalquelle entsprechenden Landessprache erzeugt werden kann. In einer weiteren Ausführungsform kann der Schritt des Erzeugens die Ausgabe der Information in einer weiteren zweiten Landessprache umfassen. Bei der zweiten Landessprache kann es sich beispielsweise um die Sprache Englisch oder um die Landessprache des Landes handeln, in welchem das Verkehrsüberwachungsgerät aufgebaut ist.

Es ist ferner von Vorteil, wenn im Schritt des Erzeugens ein Bild, eine Bildsequenz oder ein Warnhinweis oder eine Kombination aus zumindest zwei der genannten Elemente als die Information erzeugt wird. Bei dem Bild oder der Bildsequenz kann es sich beispielsweise um eine im Rahmen einer Verkehrsüberwachung erstellte Aufnahme des Fahrzeugs handeln. Bei dem Warnhinweis kann es sich etwa um einen Hinweis bezüglich einer begangenen oder möglicherweise bevorstehenden Verkehrsregelverletzung durch das Fahrzeug, eines Verkehrsaufkommens oder eines Streckenverlaufs oder um einen sonstigen verkehrssicherheitsrelevanten Hinweis handeln. Durch diese Ausführungsform kann der Fahrer mittels des Verkehrsüberwachungsgerätes gewarnt werden.

Des Weiteren kann im Schritt des Erzeugens unter Verwendung des Sensorsignals ferner ein Steuersignal zum Steuern des Fahrzeugs erzeugt werden. Hierbei kann im Schritt des Ausgebens ferner das Steuersignal an die Schnittstelle ausgegeben werden. Bei dem Steuersignal kann es sich beispielsweise um ein Signal zum Steuern eines Motors oder von Lenk- und Bremsaktoren des Fahrzeugs handeln. Durch diese Ausführungsform kann das Fahrzeug mittels des Verkehrsüberwachungsgerätes gesteuert werden.

Gemäß einer weiteren Ausführungsform kann im Schritt des Ausgebens die Information an die Schnittstelle ausgegeben werden, um die Information an zumindest ein weiteres Verkehrsüberwachungsgerät und/oder zumindest eine externe Datenübertragungseinrichtung zu übertragen. Zusätzlich oder alternativ kann im Schritt des Einlesens ferner zumindest ein von dem Fahrzeug, dem weiteren Verkehrsüberwachungsgerät oder der externen Datenübertragungseinrichtung bereitgestelltes Signal eingelesen werden. Entsprechend kann im Schritt des Erzeugens die Information ferner unter Verwendung des Signals erzeugt werden. Unter einer externen Datenübertragungseinrichtung kann beispielsweise ein Repeater oder eine Basisstation, etwa in Form einer Mobilfunkantenne, verstanden werden. Bei dem weiteren Verkehrsüberwachungsgerät kann es sich beispielsweise um ein mobiles oder stationäres Gerät zur Geschwindigkeits-, Gewichts- oder Abstandsmessung oder zur Ampelüberwachung handeln. Durch diese Ausführungsform kann die Information mit hoher Genauigkeit und Zuverlässigkeit bereitgestellt werden.

Hierbei kann das Verfahren einen Schritt des Vergleichens des Signals mit dem Sensorsignal umfassen, um eine Abweichung zwischen dem Signal und dem Sensorsignal zu ermitteln. Im Schritt des Erzeugens kann die Information in Abhängigkeit von der Abweichung erzeugt werden. Durch diese Ausführungsform kann das Signal anhand des Sensorsignals kalibriert werden. Beispielsweise ermöglicht diese Ausführungsform die Kalibrierung eines Tachometers des Fahrzeugs anhand des Sensorsignals, das eine mittels des Verkehrsüberwachungsgerätes durchgeführte und somit entsprechend geeichte Geschwindigkeitsmessung repräsentieren kann. Je nach Ausführungsform können beispielsweise weitere geeichte Informationen zum Kalibrieren des Fahrzeugs durch das Verkehrsüberwachungsgerät zur Verfügung gestellt werden. Dadurch können Informationslücken geschlossen werden.

Gemäß einer weiteren Ausführungsform kann im Schritt des Einlesens zumindest ein von der Sensoreinrichtung bereitgestelltes weiteres Sensorsignal eingelesen werden. Im Schritt des Erzeugens kann unter Verwendung des weiteren Sensorsignals zumindest eine weitere Information erzeugt werden. Entsprechend kann im Schritt des Ausgebens die weitere Information an die Schnittstelle ausgegeben werden, um die weitere Information an zumindest ein weiteres Fahrzeug zu übertragen. Durch diese Ausführungsform wird eine Datenübertragung zwischen mehreren Fahrzeugen und dem Verkehrsüberwachungsgerät ermöglicht.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Zudem schafft der hier vorgestellte Ansatz ein Verkehrsüberwachungsgerät mit folgenden Merkmalen:
einer Sensoreinrichtung zum Erfassen zumindest eines Fahrzeugs; und
einer Vorrichtung gemäß einer vorstehenden Ausführungsform.

Gegenstand des hier vorgestellten Ansatzes ist zudem ein Verkehrsüberwachungssystem mit folgenden Merkmalen:
einem Verkehrsüberwachungsgerät gemäß einer vorstehenden Ausführungsform; und
zumindest einem Fahrzeug, das über eine Schnittstelle zum Übertragen der Information mit dem Verkehrsüberwachungsgerät gekoppelt ist.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
Fig. 1 eine schematische Darstellung eines Verkehrsüberwachungssystems gemäß einem Ausführungsbeispiel;
Fig. 2 eine schematische Darstellung eines Anzeigegeräts aus Fig. 1;
Fig. 3 eine schematische Darstellung eines Verkehrsüberwachungssystems gemäß einem Ausführungsbeispiel;
Fig. 4 eine schematische Darstellung eines Verkehrsüberwachungssystems gemäß einem Ausführungsbeispiel;
Fig. 5 eine schematische Darstellung eines Verkehrsüberwachungssystems gemäß einem Ausführungsbeispiel;
Fig. 6 ein Ablaufdiagramm eines Verfahrens zum Betreiben eines Verkehrsüberwachungsgerätes gemäß einem Ausführungsbeispiel; und
Fig. 7 eine schematische Darstellung einer Vorrichtung zum Betreiben eines Verkehrsüberwachungsgerätes gemäß einem Ausführungsbeispiel.

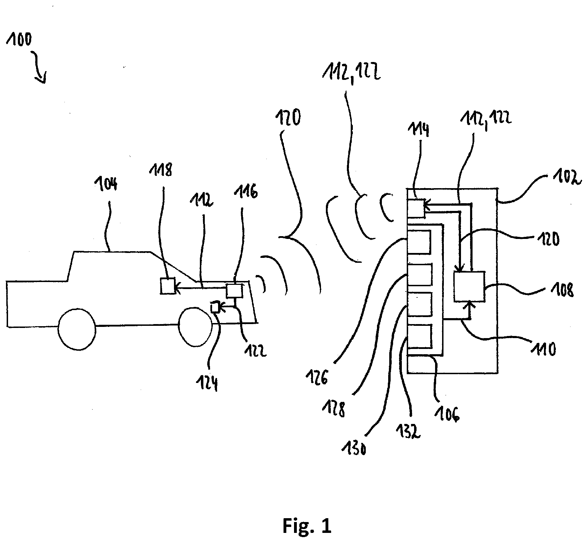

Fig. 1 zeigt eine schematische Darstellung eines Verkehrsüberwachungssystems 100 gemäß einem Ausführungsbeispiel. Das Verkehrsüberwachungssystem 100 umfasst ein Verkehrsüberwachungsgerät 102, hier ein stationäres Verkehrsüberwachungsgerät, das beispielsweise an einem Fahrbahnrand aufgestellt ist, sowie ein Fahrzeug 104. Das Verkehrsüberwachungsgerät 102 ist mit einer Sensoreinrichtung 106 und einer Vorrichtung 108 realisiert. Die Sensoreinrichtung 106 ist ausgebildet, um das Fahrzeug 104 zu erfassen. Hierbei erzeugt die Sensoreinrichtung 106 ein das Fahrzeug repräsentierendes Sensorsignal 110 und gibt dieses an die Vorrichtung 108 aus. Die Vorrichtung 108 ist ausgebildet, um unter Verwendung des Sensorsignals 110 eine Information 112, etwa einen Warnhinweis oder ein Bild oder eine Bildsequenz des Fahrzeugs 104 oder dessen Fahrers, zu erzeugen und über eine Schnittstelle 114 an das Fahrzeug 104 zu übertragen. Bei der Schnittstelle 114 handelt es sich beispielsweise um eine in das Verkehrsüberwachungsgerät 102 integrierte Sende- und Empfangseinheit zur Infrastructure-to-Vehicle-, Vehicle-to-Infrastructure- oder Infrastructure-to-Infrastructure-Kommunikation. Optional ist die Schnittstelle 114 mit einer Verstärkungseinheit zur Vehicle-to-Vehicle-Kommunikation realisiert.

Je nach Ausführungsbeispiel ist die Sensoreinrichtung 106 ausgebildet, um eine Geschwindigkeit oder ein Gewicht des Fahrzeugs 104 oder ein Bild des Fahrzeugs 104 oder dessen Fahrers zu erfassen und in Form des Sensorsignals 110 an die Vorrichtung 108 zu übermitteln. Alternativ oder zusätzlich repräsentiert das Sensorsignal 110 ein durch die Sensoreinrichtung 106 detektiertes Kennzeichen des Fahrzeugs 104. Hierbei ist die Vorrichtung 108 optional ausgebildet, um das Kennzeichen unter Verwendung des Sensorsignals 110 zumindest einer bestimmten Landessprache zuzuordnen. Entsprechend erzeugt die Vorrichtung 108 die Information 112 beispielsweise in der dem Kennzeichen zugeordneten Landessprache.

Gemäß dem in Fig. 1 gezeigten Ausführungsbeispiel ist das Fahrzeug 104 mit einer Fahrzeugschnittstelle 116 in Form einer fahrzeugseitigen Sende- und Empfangseinheit realisiert. Die Fahrzeugschnittstelle 116 ist ausgebildet, um die von dem Verkehrsüberwachungsgerät 102 bereitgestellte Information 112 zu empfangen und weiterzuleiten, hier an ein Anzeigegerät 118 des Fahrzeugs 104. Das Anzeigegerät 118 ist ausgebildet, um die Information 112 im Fahrzeug 104 wiederzugeben.

Gemäß einem Ausführungsbeispiel ist die Fahrzeugschnittstelle 116 ausgebildet, um ein Fahrzeugsignal 120, das beispielsweise eine Geschwindigkeit oder ein Gewicht des Fahrzeugs 104 oder sonstige von Sensoren des Fahrzeugs 104 erfasste Sensordaten repräsentiert, an die Schnittstelle 114 zu übertragen, die das Fahrzeugsignal 120 an die Vorrichtung 108 weiterleitet. Die Vorrichtung 108 verwendet das Fahrzeugsignal 120 zusätzlich zum Sensorsignal 110, um die Information 112 zu erzeugen. Optional führt die Vorrichtung 108 einen Vergleich zwischen dem Fahrzeugsignal 120 und dem Sensorsignal 110 durch, um eine Abweichung zwischen den beiden Signalen zu ermitteln, wobei die Information 112 in Abhängigkeit von der Abweichung erzeugt wird. Auf diese Weise ist es beispielsweise möglich, das Fahrzeugsignal 120 anhand des Sensorsignals 110 oder umgekehrt das Sensorsignal 110 anhand des Fahrzeugsignals 120 zu eichen.

Denkbar ist auch, dass die Vorrichtung 108 unter Verwendung des Sensorsignals 110 ein Steuersignal 122 zum Steuern des Fahrzeugs 104 erzeugt und über die Schnittstelle 114 an die Fahrzeugschnittstelle 116 sendet. Hierbei leitet die Fahrzeugschnittstelle 116 das Steuersignal 122 an ein Steuergerät 124 des Fahrzeugs 104 weiter, etwa an ein Motorsteuergerät. Das Steuergerät 124 ist ausgebildet, um das Fahrzeug 104 unter Verwendung des Steuersignals 122 zu steuern. Optional ist die Vorrichtung 108 ausgebildet, um das Steuersignal 122 ferner unter Verwendung des Fahrzeugsignals 120 zu erzeugen.

In Fig. 1 ist das Verkehrsüberwachungsgerät 102 beispielhaft als sogenannter Traffitower realisiert. Hierbei ist die Sensoreinrichtung 106 mit einem Geschwindigkeitssensor 126 zum Erfassen der Geschwindigkeit des Fahrzeugs 104, einem Gewichtssensor 128 zum Erfassen des Gewichts des Fahrzeugs 104, einer Kamera 130 mit Beleuchtungseinheit oder Blitz zum Erfassen eines Bildes oder einer Bildsequenz des Fahrzeugs 104 und einem Signalquellenverarbeitungs- bzw. Kennzeichenerkennungsmodul 132 (auch ANPR-Modul genannt) zum Austauschen der Objektkennung bzw. automatischen Kennzeichenlesen realisiert. Im Fahrzeug 104 befindet sich beispielsweise eine Aus- und Eingabeeinheit in Form eines LED-Monitors, Smartphones oder Navigationsgerätes als Anzeigegerät 118, über das eine audiovisuelle Ausgabe der vom Verkehrsüberwachungsgerät 102 gesendeten Information 112 erfolgt.

Das Signalquellenverarbeitungs- bzw. Kennzeichenerkennungsmodul 132 dient optional zur Informationsweitergabe an einen eingeschränkten Empfänger- oder Senderkreis. Bei Verwendung von Smartphones oder Navigationsgeräten kann die Zuordnung des Kennzeichens beispielsweise auch über eine Handynummer erfolgen. Die Frequenz, mit der Daten zwischen dem Fahrzeug 104 und dem Verkehrsüberwachungsgerät 102 übertragen werden, kann je nach Ausgabegerät variieren. Beispielsweise wird hierzu eine von Automobilherstellern festgelegte Frequenz zur Infrastructure-to-Vehicle- oder Vehicle-to-Vehicle-Kommunikation verwendet.

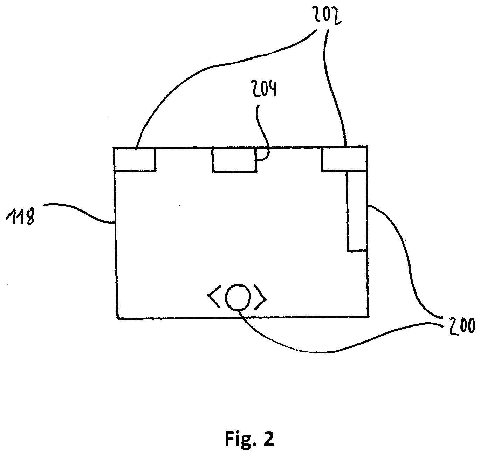

Fig. 2 zeigt eine schematische Darstellung eines Anzeigegeräts 118 aus Fig. 1. Bei dem Anzeigegerät 118 handelt es sich um eine fahrzeugseitige Aus- und Eingabeeinheit. Das Anzeigegerät 118 umfasst beispielhaft eine Bedieneinheit 200, Lautsprecher 202 zur Audioausgabe und ein Mikrofon 204 zur Spracheingabe.

Mittels des Anzeigegeräts 118 können beispielsweise folgende Warnhinweise wiedergegeben werden:
"Achtung! Tempo-30-Zone! Sie fahren zu schnell!"
"Achtung! TraffiSection! Ihre Durchschnittsgeschwindigkeit wird überwacht. Zurzeit fahren Sie 5 km/h zu schnell."
"Achtung! Handyverbot!"
"Attention! Too much weight! You must turn right!"

Der letztgenannte Warnhinweis verbindet beispielsweise ein automatisches Kennzeichenlesen zur Identifizierung der Landessprache mit einer Klassifizierung oder Wägung des Fahrzeugs. Somit kann beispielsweise alternierend eine Information in unterschiedlichen Sprachen erzeugt werden. Werden Bilddaten ausgewertet, etwa um zu überprüfen, ob der Fahrer ein Handy am Ohr hält, wird beispielsweise der Warnhinweis "Achtung! Handyverbot!" als Information durch das Verkehrsüberwachungsgerät an das Anzeigegerät 118 gesendet.

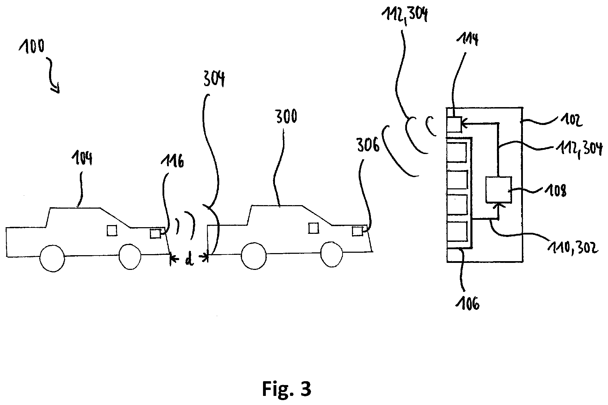

Fig. 3 zeigt eine schematische Darstellung eines Verkehrsbeobachtungssystems 100 gemäß einem Ausführungsbeispiel. Im Unterschied zu Fig. 1 ist Sensoreinrichtung 106 gemäß diesem Ausführungsbeispiel ausgebildet, um ferner ein weiteres Fahrzeug 300 zu erfassen, hier beispielhaft ein dem Fahrzeug 104 vorausfahrendes Fahrzeug. Hierzu erzeugt die Sensoreinrichtung 106 ein das weitere Fahrzeug 300 repräsentierendes weiteres Sensorsignal 302 und gibt dieses an die Vorrichtung 108 aus. Die Vorrichtung 108 ist ausgebildet, um unter Verwendung des weiteren Sensorsignals 302 eine weitere Information 304 zu erzeugen und über die Schnittstelle 114 an eine weitere Fahrzeugschnittstelle 306 des weiteren Fahrzeugs 300 zu übertragen.

Gemäß einem Ausführungsbeispiel ist die Sensoreinrichtung 106 ausgebildet, um neben Geschwindigkeitsmessdaten bezüglich der beiden Fahrzeuge 104, 300 zusätzlich einen Abstand d zwischen dem Fahrzeug 104 und dem weiteren Fahrzeug 300 und eine jeweilige Masse der beiden Fahrzeuge 104, 300 zu ermitteln. Diese Daten werden durch die Vorrichtung 108 verarbeitet. Danach werden die Informationen 112, 304 zusammengestellt und an die Fahrzeugschnittstellen 116, 306 gesendet.

Gemäß einem Ausführungsbeispiel wird die Information 112 an das Fahrzeug 104 und die weitere Information 304 an das weitere Fahrzeug 300 gesendet. Alternativ kann die Information 112 durch eine Weiterverarbeitung, etwa in einer App, verwendet werden, um die weitere Information 304 zu erzeugen. Somit wird die weitere Information 304 nicht durch das Verkehrsüberwachungsgerät 102 direkt, sondern über die Fahrzeugschnittstelle 116 an die weitere Fahrzeugschnittstelle 306 weitergeleitet.

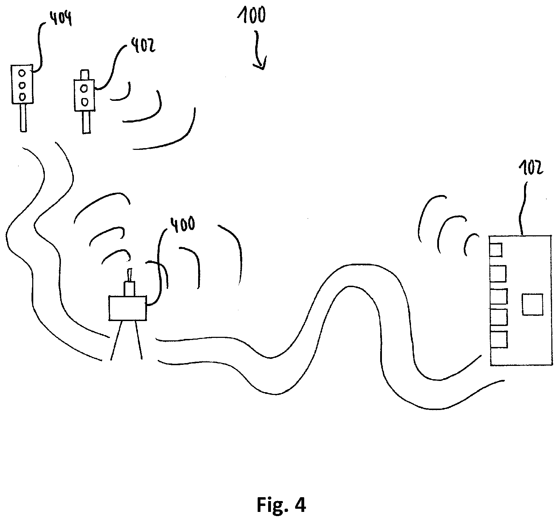

Fig. 4 zeigt eine schematische Darstellung eines Verkehrsüberwachungssystems 100 gemäß einem Ausführungsbeispiel. Im Unterschied zu einem vorangehend anhand der Figuren 1 bis 3 beschriebenen Verkehrsüberwachungssystem umfasst das in Fig. 4 gezeigte Verkehrsüberwachungssystem 100 zusätzlich zum Verkehrsüberwachungsgerät 102 beispielhaft ein weiteres Verkehrsüberwachungsgerät 400, ein zusätzliches Verkehrsüberwachungsgerät 402 sowie eine Lichtzeichenanlage 404. Die Verkehrsüberwachungsgeräte 400, 402 und die Lichtzeichenanlage 404 können sowohl untereinander als auch mit dem Verkehrsüberwachungsgerät 102 zum gegenseitigen Informationsaustausch vernetzt sein.

Bei dem weiteren Verkehrsüberwachungsgerät 400 handelt es sich beispielsweise um ein mobiles Verkehrsüberwachungsgerät zur Geschwindigkeitsüberwachung. Das zusätzliche Verkehrsüberwachungsgerät 402 dient beispielsweise zur Rotlicht- oder Ampelüberwachung. Die in Fig. 4 gezeigten Verkehrsüberwachungsgeräte können insbesondere zu unterschiedlichen Gemeinden oder Städten gehören.

Sind beispielsweise das Verkehrsüberwachungsgerät 102 und das weitere Verkehrsüberwachungsgerät 400 beispielsweise je mit einem Kennzeichenerkennungsmodul, bevorzugt jedoch auch mit einem Signalquellenverarbeitungsmodul für Ortungssignale, ausgeführt, so ist es möglich, wiederholte geringe Geschwindigkeitsüberschreitungen eines Fahrzeugs zu detektieren, d. h. Geschwindigkeitsüberschreitungen, die knapp oberhalb einer erlaubten Höchstgeschwindigkeit, jedoch unterhalb eines Auslöseschwellenwerts liegen. Beispielsweise kann über eine Infrastructure-to-Infrastructure-Kommunikation zwischen den betreffenden Verkehrsüberwachungsgeräten ein Warnhinweis über eine Vehicle-to-Infrastructure-Kommunikation an das betreffende Fahrzeug ausgegeben werden, etwa der Hinweis "Sie sind geblitzt worden, da Sie wiederholt mit 51 km/h statt 50 km/h zu schnell fahren!".

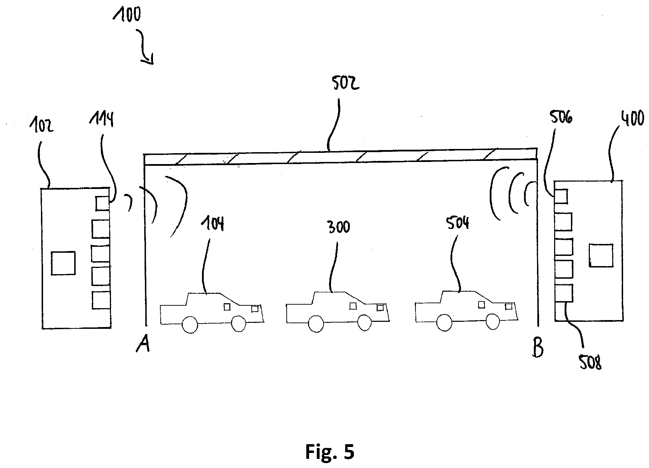

Fig. 5 zeigt eine schematische Darstellung eines Verkehrsüberwachungssystems 100 gemäß einem Ausführungsbeispiel. Im Unterschied zu den Figuren 1 bis 4 umfasst das Verkehrsüberwachungssystem 100 gemäß diesem Ausführungsbeispiel das Verkehrsüberwachungsgerät 102 sowie das weitere Verkehrsüberwachungsgerät 400, hier zwei stationäre Traffitower, die an einander gegenüberliegenden Enden eines Tunnels 502 aufgestellt sind, um durch den Tunnel 502 fahrende Fahrzeuge, hier das Fahrzeug 104, das weitere Fahrzeug 300 sowie ein zusätzliches Fahrzeug 504, zu erfassen.

Gezeigt ist eine Streckenkontrolle, auch Point-to-Point-Messung oder TraffiSection genannt. Beispielhaft befindet sich das Verkehrsüberwachungsgerät 102 im Einfahrtsbereich A des Tunnels 502 und das weitere Verkehrsüberwachungsgerät 400 im Ausfahrtsbereich B des Tunnels 502. Die Streckenkontrolle erfolgt im Tunnel 502. Das weitere Verkehrsüberwachungsgerät 400 umfasst analog zum Verkehrsüberwachungsgerät 102 eine weitere Schnittstelle 506, die mit der Schnittstelle 114 des Verkehrsüberwachungsgerätes 102 zum gegenseitigen Datenaustausch per Infrastructure-to-Infrastructure-Kommunikation gekoppelt ist. Ferner umfasst das weitere Verkehrsüberwachungsgerät 400 beispielsweise ein Kennzeichenerkennungsmodul, bevorzugt jedoch auch ein Signalquellenverarbeitungsmodul 508 für Ortungssignale zum automatischen Erkennen etwaiger Signalquellen und/oder Kennzeichen. Mithilfe der beiden Verkehrsüberwachungsgeräte 102, 400 wird nun beispielsweise eine Signalquellen- oder Kennzeichenerkennung der im Tunnel 502 befindlichen Fahrzeuge durchgeführt.

Beispielsweise werden durch die beiden Verkehrsüberwachungsgeräte 104, 400 folgende Warnhinweise als Informationen erzeugt und über Infrastructure-to-Vehicle-Kommunikation an die betreffenden Fahrzeuge im Tunnel 502 gesendet:
"Achtung! TraffiSection! Ihre Durchschnittsgeschwindigkeit wird überwacht! Zurzeit fahren Sie 5 km/h zu schnell!"
"Achtung! Stau!"
"Achtung! Smog! Bitte Motor abstellen!" Dieser Warnhinweis kann insbesondere in Verbindung mit einer Abgasüberwachung im Tunnel 502 erzeugt werden.
"Achtung! Ihr Fahrzeug hat die Tunnelausfahrt noch nicht erreicht. Wenn Sie eine Panne haben, können wir Ihnen helfen." In diesem Fall kann beispielsweise automatisch eine entsprechende Information über Infrastructure-to-Infrastructure-Kommunikation durch zumindest eines der beiden Verkehrsüberwachungsgeräte 102, 400 erzeugt werden und beispielsweise an eine Polizeistation gesendet werden.

Denkbar ist auch, dass Informationen für einen Beifahrer, beispielsweise wissenswerte Informationen über eventuelle Baumaßnahmen, als fortlaufende Informationen, etwa zum Nachlesen nach der Fahrt, bereitgestellt werden.

Beispielsweise können die beiden Verkehrsüberwachungsgeräte 102, 400 ausgebildet sein, um eine exakte Geschwindigkeit der Fahrzeuge im Einfahrtsbereich A zu messen und beim Überschreiten einer vorgegebenen Höchstgeschwindigkeit einen Warnhinweis in Verbindung mit einer erforderlichen Geschwindigkeitsanpassung an die betreffenden Fahrzeuge auszusenden, beispielsweise "Sie müssen langsamer fahren, damit Sie die Durchschnittsgeschwindigkeit von 70 km/h nicht überschreiten.". Zwischen einzelnen Point-to-Point-Stationen können Repeater als externe Datenübertragungseinrichtungen geschaltet sein, die ausgebildet sein können, um beispielsweise eine Trackinggeschwindigkeit an ein Fahrzeug weiterzugeben, etwa in Form des Hinweises "Sie fahren immer noch zu schnell. Sie dürfen maximal 65 km/h fahren.". Eine Point-to-Point-Strecke mit zwei Verkehrsüberwachungsgeräten mit einer Trackingstrecke von je 100 m wäre beispielsweise 200 m lang.

Der Vorteil des Vorhandenseins eines Signalquellenverarbeitungsmoduls besteht in dem Austausch einer eindeutigen und möglichst datenschutzkonformen und von der tatsächlichen Identität des Fahrzeugs unabhängigen Objektkennung. Die Objektkennung ist vorzugsweise verschlüsselt (z. B. Hash mit Salt), mit einem Zeitstempel versehen und kann wiederum in ein verschlüsseltes Abfrageprozedere einfließen. So erkennt das Signalquellenverarbeitungsmodul etwa einen sich mit einem Fahrzeug bewegenden Bluetooth-Sender, verwendet die Kennung des Bluetooth-Senders unverarbeitet und/oder zur Generierung einer zumindest temporär eindeutigen Objektkennung des Fahrzeugs, welche zur weiteren Kommunikation zwischen I2V und V2I Verwendung finden soll. In Verbindung mit verschiedensten Sensoren wird das Fahrzeug samt Objektkennung mithilfe des Ortungssignals getrackt, d. h. lückenlos verfolgt. Die Trackingdaten können in Form einer grafischen Weg-Zeit-Darstellung protokolliert werden. Im Falle eines Geschwindigkeitsverstoßes kann durch Auslösen eines Ausfahrtbildes in Punkt Beine Zuordnung der Objekt- oder Signalkennung und einer tatsächlichen Identität des Fahrzeugs hergestellt werden. Hierzu bedarf es nicht zwangsläufig mehr eines Einfahrtbildes A, welches bisher nach dem Stand der Technik ohne Anfangsverdacht hätte erstellt werden müssen. Darüber hinaus bildet die Objektkennung mindestens bis zum Zeitpunkt der Ausfahrt B eine eindeutige Adresse, die es erlaubt, dass nur zwischen dieser Adresse bzw. mehreren Adressen bei mehreren Fahrzeugen und dem Verkehrsüberwachungsgerät als I2V/V2I kommuniziert wird. Voraussetzung zur Trennung der Ortungssignale sind speziell gerichtete Sensoren bzw. Antennen.

Die Objektkennung kann einerseits durch das Kfz-Kennzeichen selbst definiert sein, in Zeiten eines erhöhten Datenschutzes jedoch auch durch das verschlüsselte Abbild oder dessen Resultat oder aus einer Kennung des Ortungssignals selbst oder aus einer beispielsweise durch Zufallsgenerierung veränderten oder zugeordneten Kennung.

Im Gegensatz zu einer Straßenschilderkennung, die auf einem Display in einem Fahrzeug angezeigt werden kann, wird die Verbindung zwischen Fahrzeug und Verkehrsüberwachungsgerät gemäß einem Ausführungsbeispiel der vorliegenden Erfindung durch das Verkehrsüberwachungsgerät hergestellt, insbesondere drahtlos über eine Frequenz und Methodik der Car-to-Car-Kommunikation.

Hierbei wird beispielsweise ein vom Verkehrsüberwachungsgerät erzeugtes Bild an das Fahrzeug ausgesandt und über ein Anzeigegerät im Fahrzeug wiedergegeben, beispielsweise in Kombination mit Informationen aller Art, insbesondere mit Warnhinweisen wie beispielsweise "Gefahr! Schule: Geschwindigkeitsbegrenzung 30" oder "Sie wurden geblitzt", gegebenenfalls in Verbindung mit einem beim Blitzen erfassten Fahrerfoto oder einem weiteren Hinweis wie etwa "Vorläufigen Bescheid direkt an das Auto oder an das Handy des Fahrzeughalters oder Fahrers senden".

Je nach Ausführungsbeispiel können Informationen an weitere Fahrzeuge über Car-to-Car- oder Car-to-Environment-Kommunikation verbreitet werden, beispielsweise der Hinweis "Auf dieser Strecke wird geblitzt".

Optional erfolgt über das Verkehrsüberwachungsgerät ein Eingriff ins Motormanagement oder eine Steuerung des Fahrzeugs.

Denkbar ist auch, dass Gefahrenhinweise als Informationen vom Verkehrsüberwachungsgerät direkt ins Fahrzeug übertragen werden, beispielsweise Informationen über Wetterverhältnisse ("Achtung! Glätte!"), standortbezogene Informationen, Uhrzeiten für zeitabhängige Verbote, Verkehrszeichen oder eigene Schilder, Bilder und Sequenzen wie auf Dialogdisplays (Kinder, Unfälle, Kurzszenen). Ferner kann eine Echtzeit-Videoüberwachung eines toten Winkels, etwa eines Radwegs, aufgenommen werden und direkt an das Anzeigegerät des Fahrzeugs gesendet werden. Des Weiteren können Hinweise wie "Achtung! Rechtsabbieger!", Werbebotschaften, Informationen über verfügbare Parkplätze, Statistiken des Verkehrsüberwachungsgerätes, etwa Staudaten bei geringen Geschwindigkeiten und geringem Fahrzeugdurchfluss, oder Umweltdaten, etwa bezüglich einer lokalen Feinstaubbelastung, über das Verkehrsüberwachungsgerät an das Fahrzeug gesendet werden. Denkbar ist auch die Übertragung von Geisterfahrerwarnungen.

Gemäß einem weiteren Ausführungsbeispiel liest das Verkehrsüberwachungsgerät Geschwindigkeits- und Sensordaten des Fahrzeugs ein, etwa Sensordaten eines Regensensors des Fahrzeugs. Unter Verwendung dieser Daten können die Sensoren des Fahrzeugs durch Vergleich mit der Sensoreinrichtung des Verkehrsüberwachungsgerätes gegengeprüft werden. Die Signale der Sensoreinrichtung können beispielsweise mit Daten kalibrierter Sensoren des Fahrzeugs verglichen werden, wobei das Verkehrsüberwachungsgerät ein entsprechendes Fehlerprotokoll an das Fahrzeug ausgeben kann.

Ein vom Verkehrsüberwachungsgerät aufgenommenes Bild eines Fahrers des Fahrzeugs kann beispielsweise auf Anfrage durch das Fahrzeug vom Verkehrsüberwachungsgerät an das Fahrzeug gesendet werden. Das auf diese Weise abgerufene Bild kann beispielsweise von Taxiunternehmen, Busfahrern oder Lkw-Fahrern als Nachweis für Lenkzeiten, von Kfz-Versicherungen als Nachweis einer Fahrpraxis oder von Mitfahrzentralen als Nachweis über eine vorschriftsmäßige Beförderung, insbesondere über eine Anzahl der Insassen, genutzt werden.

Die Information kann beispielsweise unter Verwendung von zumindest zwei Schwellenwerten erzeugt werden. So wird beispielsweise eine erste Information an das Fahrzeug ausgesendet, wenn das Fahrzeug eine erste Geschwindigkeit erreicht, und eine zweite Information an das Fahrzeug ausgesendet, wenn das Fahrzeug eine zweite Geschwindigkeit erreicht.

Zur Wahrung maximal zulässiger Brückenlasten kann das Fahrzeug nach üblichen Methoden klassifiziert oder gewogen werden. In Kombination mit einer automatischen Kennzeichenerkennung kann mittels des Verkehrsüberwachungsgerätes beispielsweise auf eine Herkunft des Fahrers geschlossen werden. Gegebenenfalls erfolgt zusätzlich eine entsprechende Zuordnung zu einer Landessprache. So kann das Verkehrsüberwachungsgerät beispielsweise einen Hinweis wie "Achtung! Ihr Fahrzeug ist zu schwer! Bitte rechts abbiegen!" in der jeweiligen Landessprache des Fahrers erzeugen.

Optional kann das Verkehrsüberwachungsgerät im Kontext einer Pannendetektion verwendet werden, etwa im Bereich einer Point-to-Point-Strecke, gegebenenfalls in Kombination mit einer Kennzeichenerkennung.

Die vom Verkehrsüberwachungsgerät erzeugten Informationen werden gemäß einem Ausführungsbeispiel bevorzugt nur an den jeweils betroffenen Verkehrsteilnehmer ausgegeben. Dies geschieht beispielsweise über eine Kennzeichenerkennung und eine Registrierung der jeweiligen Zugehörigkeit des Ausgabegeräts oder durch Kombination der Kennzeichenerkennung mit einer Handynummer eines Smartphones, auf dem eine geeignete App zur Kommunikation mit dem Verkehrsüberwachungsgerät installiert ist.

Es können mehrere Verkehrsüberwachungsgeräte miteinander vernetzt werden. Dadurch können beispielsweise aufeinanderfolgende Geschwindigkeitsverstöße ein und desselben Fahrzeugs und ein und desselben Fahrers an verschiedenen, aufeinanderfolgenden Orten geahndet werden.

Optional kann durch das Verkehrsüberwachungsgerät eine Geschwindigkeitsempfehlung an eine Wechselverkehrszeichenanlage oder umgekehrt ausgegeben werden. Hierzu können etwa mittels eines Regensensors oder einer externen Datenquelle von meteorologischen Diensten erfasste Wetterdaten, Geschwindigkeitsstatistiken und weitere Messungen des Verkehrsüberwachungsgerätes übertragen werden.

Über eine entsprechende App können beispielsweise bei einem Unfall Überwachungsdaten, die von dem Verkehrsüberwachungsgerät etwa in Form eines Videos aufgenommen wurden, abgerufen werden. Das Abrufen der Überwachungsdaten erfolgt beispielsweise fahrzeugabhängig.

Denkbar ist auch eine Gesichtserkennung durch das Verkehrsüberwachungsgerät. Hierbei können entsprechende Daten verschlüsselt an bestimmte autorisierte Personenkreise wie etwa an die Polizei, beispielsweise unter Nutzung spezieller Frequenzen, übertragen werden.

Optional erfolgt durch das Verkehrsüberwachungsgerät ein Abgleich von Daten mit dem Zentralverkehrsregister.

Gemäß einem weiteren Ausführungsbeispiel ist das Verkehrsüberwachungsgerät ausgebildet, um mit einer externen Datenübertragungseinrichtung wie etwa einem benachbarten Handymast zu kommunizieren, etwa um zu erkennen, ob ein Fahrer während des Fahrens ein Handy nicht nur am Ohr hält, sondern auch tatsächlich damit telefoniert. Hierzu kann die Handynummer beispielsweise mit dem Kennzeichen des Fahrzeugs abgeglichen werden. Optional sendet das Verkehrsüberwachungsgerät hierbei einen entsprechenden Warnhinweis wie etwa "Achtung! Handyverbot!", "Bitte auflegen!" oder "Strafzahlung fällig" an das Fahrzeug oder das Handy.

Zudem kann das Verkehrsüberwachungsgerät mit einer Ampelanlage vernetzt sein. Hierbei können neben Rotlichtverstößen auch Rotphasen überwacht werden. Befindet sich das Verkehrsüberwachungsgerät beispielsweise in der näheren Umgebung der Ampelüberwachung, etwa in 1 km Entfernung, so kann das Verkehrsüberwachungsgerät unter Verwendung der Ampelüberwachung etwa eine Geschwindigkeitsempfehlung zur Ausnutzung einer Grünphase als Information an das Fahrzeug senden, wie etwa "Achtung! Rotlichtüberwachung! Empfehlung: 42 km/ h!".

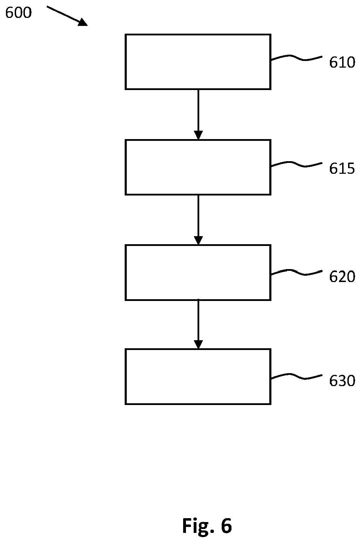

Fig. 6 zeigt ein Ablaufdiagramm eines Verfahrens 600 zum Betreiben eines Verkehrsüberwachungsgerätes gemäß einem Ausführungsbeispiel. Das Verfahren 600 kann beispielsweise im Zusammenhang mit einem vorangehend anhand der Figuren 1 bis 5 beschriebenen Verkehrsüberwachungsgerät durchgeführt oder angesteuert werden. Hierbei wird in einem Schritt 610 das von der Sensoreinrichtung bereitgestellte Sensorsignal eingelesen. In einem weiteren Schritt 620 wird die Information unter Verwendung des Sensorsignals erzeugt. Schließlich wird die Information in einem Schritt 630 an die Schnittstelle zu dem Fahrzeug ausgegeben.

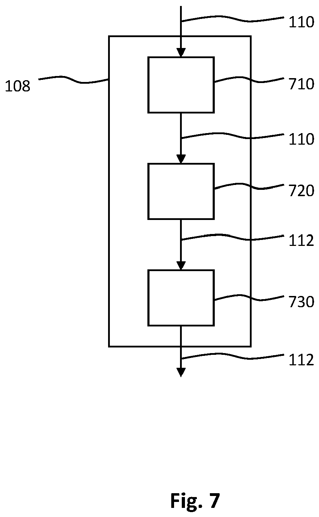

Fig. 7 zeigt eine schematische Darstellung einer Vorrichtung 108 gemäß einem Ausführungsbeispiel, etwa einer Vorrichtung, wie sie vorangehend anhand der Figuren 1 bis 5 beschrieben ist. Die Vorrichtung 108 umfasst eine Einleseeinheit 710 zum Einlesen des von der Sensoreinrichtung bereitgestellten Sensorsignals 110, eine Erzeugungseinheit 720 zum Erzeugen der Information 112 unter Verwendung des Sensorsignals 110 sowie eine Ausgabeeinheit 730 zum Ausgeben der Information 112 an die Schnittstelle zu dem Fahrzeug.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (600) zum Betreiben eines Verkehrsüberwachungsgerätes (102), wobei das Verfahren (600) folgende Schritte umfasst:
Einlesen (610) mindestens eines von einer Sensoreinrichtung (106) des Verkehrsüberwachungsgerätes (102) bereitgestellten Sensorsignals (110), das einen Abstand zwischen dem Fahrzeug (104) und zumindest einem anderen Fahrzeug (300) repräsentiert;
Austauschen (615) einer mindestens temporär eindeutigen, verschlüsselten Objektkennung eines Fahrzeugs (104) zwischen einer fahrzeugseitigen Schnittstelle (116) und einer Schnittstelle (114) des Verkehrsüberwachungsgerätes (102) und Austauschen von Schlüsseln;
Erzeugen (620) einer Information (112) unter Verwendung des Sensorsignals (110); und Ausgeben (630) der Information (112) an eine Schnittstelle (114) zu dem Fahrzeug (104) und/oder einer Rechnereinheit, **gekennzeichnet durch** einen Schritt des Zuordnens der Objektkennung zu zumindest einer Landessprache unter Verwendung des Sensorsignals (110), wobei im Schritt des Erzeugens (620) die Information (112) in Abhängigkeit von der Landessprache erzeugt wird.

2. Verfahren (600) gemäß Anspruch 1, **dadurch gekennzeichnet, dass** im Schritt des Erzeugens (620) ein Bild und/oder eine Bildsequenz und/oder ein Warnhinweis als die Information (112) erzeugt wird.

3. Verfahren (600) gemäß einem der vorangegangenen Ansprüche, **dadurch gekennzeichnet, dass** im Schritt des Erzeugens (620) unter Verwendung des Sensorsignals (110) ferner ein Steuersignal (122) zum Steuern des Fahrzeugs (104) erzeugt wird, wobei im Schritt des Ausgebens (630) ferner das Steuersignal (122) an die Schnittstelle (114) ausgegeben wird.

4. Vorrichtung (108) mit Einheiten (710, 720, 730), die ausgebildet sind, um ein Verfahren (600) gemäß einem der vorangegangenen Ansprüche auszuführen und/oder anzusteuern.

5. Verkehrsüberwachungsgerät (102) mit folgenden Merkmalen:
einer Sensoreinrichtung (106) zum Erfassen zumindest eines Fahrzeugs (104); und
einer Vorrichtung (108) gemäß Anspruch 4.

6. Verkehrsüberwachungssystem (100) mit folgenden Merkmalen:
einem Verkehrsüberwachungsgerät (102) gemäß Anspruch 5; und
zumindest einem Fahrzeug (104), das über eine Schnittstelle (114) zum Übertragen der Information (112) mit dem Verkehrsüberwachungsgerät (102) gekoppelt ist.

7. Computerprogramm, das ausgebildet ist, um das Verfahren (600) gemäß einem der Ansprüche 1 bis 3 auszuführen und/oder anzusteuern.
